# EUROPÄISCHE PATENTSCHRIFT

(11) **EP 0 692 642 B1**
(45) Veröffentlichungstag und Bekanntmachung des Hinweises auf die Patenterteilung: **10.02.1999**
(21) Anmeldenummer: 95110057.7
(22) Anmeldetag: 28.06.1995
(51) Int. Cl.: F16B 21/18

(54) **Scheibe und Anordnung eines Sicherungsrings mit einer Scheibe auf einer Welle**
Washer and assembly of a retention ring with a washer on a shaft
Rondelle et arrangement d'un anneau de retenue avec une rondelle sur un arbre

(30) Priorität: 12.07.1994 US 274090
(43) Veröffentlichungstag der Anmeldung: 17.01.1996
(73) Patentinhaber: Deere & Company, Moline, Illinois 61265-8098 (US)
(72) Erfinder: Meyer, Duane Fredrick, Waterloo, Iowa 50701 (US)
(74) Vertreter: Feldmann, Bernhard

(56) Entgegenhaltungen:
- DE-A- 1 400 784
- DE-B- 1 016 507
- DE-C- 4 007 942
- US-A- 4 459 119
- "INDUSTRIAL FASTENERS HANDBOOK" 1980 , TRADE AND TECHNICAL PRESS LIMITED , MORDEN, SURREY, ENGLAND XP002008783 * page 164: "Sta-Lok locking washer systems" *
- IBM TECHNICAL DISCLOSURE BULLETIN, Bd. 21, Nr. 9, Februar 1979, NEW YORK, US, Seite 3681 XP002008782 W.D. FREEMAN: "Retaining ring for shaft with keyway"

## Beschreibung

Die Erfindung betrifft eine Scheibe zum Sichern eines in der umlaufenden Nut einer Welle angeordneten Sicherungsrings. Die Scheibe besteht aus einem im wesentlichen flachen, ringförmigen Grundkörper, der angrenzend zum Sicherungsring auf der Welle montierbar ist. Ferner betrifft die Erfindung die Anordnung eines Sicherungsrings und einer Scheibe auf einer Welle, bei der die Welle eine umlaufende Nut und wenigstens einen sich axial erstreckenden Keilzahn, in den ein Zahn der Scheibe eingreift, aufweist und bei der der Sicherungsring in der Nut angeordnet ist und in Umfangsrichtung zwei gegenüber liegende Enden aufweist, zwischen denen eine Lücke ausgebildet ist.

Bei Fahrzeugen wird häufig ein Sicherungsring in die Nut einer Welle eingesetzt. Gewöhnlich hat der Sicherungs- oder Sprengring eine im wesentlichen runde Form, die in Umfangsrichtung durch eine Öffnung oder eine Lücke unterbrochen ist und die im allgemeinen dem Buchstaben C ähnelt. Durch die Montage des Sicherungsrings auf der Welle wird eine Schulter oder Stufe gebildet mit der der Sicherungsring ein anderes Teil, beispielsweise ein Kugel- oder Rollenlager auf der Welle axial abstützt bzw. verankert. Beispielsweise kann ein Kegelrollenlager auf einer Getriebewelle eines Arbeitsfahrzeugs durch einen Sicherungsring axial festgesetzt werden. Der Sicherungsring kann sich dabei jedoch in nachteiliger Weise relativ zur Welle verdrehen, was zum Verschleiß des Sicherungsrings führen kann.

Ein Verdrehen des Sicherungsrings kann das Teil, das durch ihn abgestützt oder auf der Welle zurückgehalten wird, nachteilig beeinflussen. Beispielsweise ist die genaue axiale Einstellung eines Kegelrollenlagers erforderlich, wenn dieses auf der Welle montiert wird, um ein geeignetes Lagerlaufspiel zwischen dem inneren und dem äußeren Laufring des Lagers zu gewährleisten.

Ein Verschleiß des Sicherungsrings oder der den Sicherungsring abstützenden Wandungen der Wellennut, die durch ein Verdrehen des Sicherungsrings relativ zur Welle verursacht werden, führen zu einer Vergrößerung des Lagerspiels und einer Einbuße hinsichtlich des einwandfreien Arbeitens des Lagers im Betrieb.

Bei einigen Konstruktionen ist auf der Welle zwischen dem Sicherungsring und dem Kegelrollenlager eine Druckscheibe eingesetzt. Auch hier treten Fehler infolge einer möglichen Verdrehung des Sicherungsrings relativ zur Welle, eines Verschleißes von Sicherungsring und Druckring und einer Lockerung des Spiels des Kegelrollenlagers auf.

Durch die US-A-4,459,119 ist eine Sicherungsscheibe für einen koaxial dazu angeordneten Sicherungsring, insbesondere Sprengring bekannt geworden. Die Sicherungsscheibe enthält auf ihrer dem Sicherungsring zugewandten Seite Vorsprünge. Die Vorsprünge sind dadurch gebildet, daß äußere Bereiche der Sicherungsscheibe soweit umgebogen sind daß sie hinter die Rückseite des Sicherungsrings greifen. Diese Ausbildung der Sicherungsscheibe soll einer radialen Verformung des Sicherungsrings entgegenwirken und den Sicherungsring in der Wellennut halten, so daß er nicht aus der Wellennut springt und eine axiale Verschiebung von Sicherungsring und Sicherungsscheibe längs der Welle verhindert wird. Bei dieser Konstruktion ist jedoch eine gemeinsame Verdrehung von Sicherungsring und Sicherungsscheibe relativ zur Welle möglich, so daß auch hier Verschleißerscheinungen mit den beschriebenen nachteiligen Folgen auftreten können.

Die der Erfindung zugrunde liegende Aufgabe wird darin gesehen, eine Scheibe sowie eine Anordnung der eingangs genannten Art anzugeben, durch die die genannten Probleme überwunden werden können. Insbesondere soll durch die Art der Scheibe ein Verschleiß des Sicherungsrings weitgehend vermieden werden. Der Sicherungsring soll an einem Verdrehen relativ zur Welle gehindert und in der Nut der Welle festgehalten werden.

Die Aufgabe wird erfindungsgemäß durch die Lehre eines der Ansprüche 1 oder 8 gelöst. Weitere vorteilhafte Ausgestaltungen und Weiterbildungen der Erfindung gehen aus den Unteransprüchen hervor.

Die erfindungsgemäße Scheibe enthält wenigstens einen Zahn, der mit einem Keilzahn der Welle in Eingriff tritt, um eine Verdrehung der Scheibe relativ zur Welle zu verhindern. Ein Anschlag oder Vorsprung der Scheibe läßt sich bei der Montage so positionieren, daß er in eine Lücke des Sicherungsrings, der von einer umlaufenden Nut in der Welle aufgenommen wird, eingreift, um ein Verdrehen des Sicherungsrings relativ zur Welle zu verhindern.

Anhand der Zeichnung, die ein bevorzugtes Ausführungsbeispiel der Erfindung zeigt, werden nachfolgend die Erfindung sowie weitere Aufgaben, Vorteile und vorteilhafte Weiterbildungen und Ausgestaltungen der Erfindung näher beschrieben und erläutert.

Es zeigt:
- Fig. 1: die Querschnittdarstellung einer Welle, die eine erfindungsgemäße Scheibe sowie einen Sicherungsring trägt,
- Fig. 2: eine Schnittdarstellung entlang der in Fig. 1 dargestellten Linie 2 - 2 und
- Fig. 3: eine Schnittdarstellung entlang der in Fig. 1 dargestellten Linie 3 - 3.

Wie aus der Zeichnung hervorgeht, verkörpert sich die vorliegende Erfindung in einer Scheibe 10, durch die ein Sicherungsring 12 zurückgehalten wird. Die dargestellte Scheibe 10 verhindert, daß der Sicherungsring 12 sich relativ zu einer Welle 18 verdrehen und aus der Wellennut 16 springen kann.

Der Sicherungsring 12 weist eine radial nach außen weisende Fläche 13 und einen in Umfangsrichtung ausgebildeten Zwischenraum bzw. eine Lücke 14, die durch Enden 15 des Sicherungsrings 12 begrenzt ist, auf. Der Sicherungsring 12 greift teilweise in eine ringförmige Nut 16, die in die Außenfläche einer Welle 18 eingelassen ist, ein und dient dem axialen Abstützen oder Zurückhalten eines anderen Teils, beispielsweise eines Wälzlagers 20 auf der Welle 18. Die Scheibe 10 ist vorzugsweise zwischen dem Sicherungsring 12 und dem Wälzlager 20 angeordnet. Bei dem Wälzlager 20 handelt es sich vorzugsweise um ein Kegelrollenlager, das durch den Sicherungsring 12 abgestützt wird, wobei die Scheibe 10 den Sicherungsring 12 von dem Kegelrollenlager 20 trennt.

Die Scheibe 10 enthält einen radial nach innen gerichteten Vorsprung oder Zahn 24, der mit einem auf der Welle 18 befindlichen Keilzahn 26 verzahnt ist. Vorzugsweise hat die Scheibe 10 mehrere Zähne 24, die mit mehreren sich im wesentlichen parallel zur Wellenachse erstreckenden Keilzähnen 26 der Welle 18 in Eingriff stehen. Vorzugsweise sind die Keilzähne 26 auf dem Umfang der Welle 18 in symmetrischer Verteilung von Gruppen ausgebildet, die mit einer Anordnung von Zähnen 24 der Scheibe 10 derart kooperieren, daß eine Montage der Scheibe 10 auf der Welle 18 erleichtert wird, indem mehrere verschiedene Einbaulagen der Zähne 24 relativ zu den Keilzähnen 26 möglich sind.

Die Scheibe 10 enthält einen radial nach innen gerichteten Vorsprung oder Anschlag 28, der in die Lücke 14 des Sicherungsrings 12 eingreift. Der Anschlag 28 ist als gebogener Vorsprung 30 ausgebildet, der einen sich im wesentlichen radial erstreckenden Schenkel 32 aufweist, an dessen radial innerem Ende sich ein Fuß 34 anschließt. Der Fuß 34 ist in eine im wesentlichen parallel zur Wellenachse verlaufende Richtung abgebogen und ragt über eine Seitenfläche der Scheibe 10 hinaus. Er greift in die Lücke 14 des Sicherungsrings 12 ein, so daß er bei auftretenden Drehmomenten in Eingriff mit den Enden 15 des Sicherungsrings 12 tritt und ein Verdrehen des Sicherungsrings 12 relativ zu der Scheibe 10 verhindert.

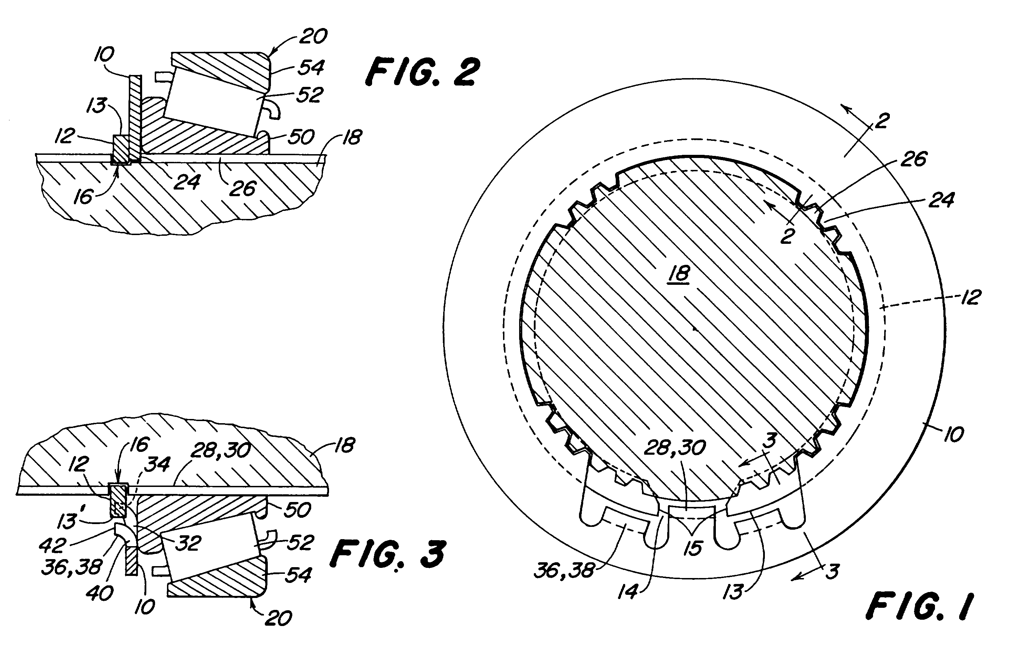

Die Scheibe 10 enthält ferner wenigstens einen radial nach innen gerichteten, den Anschlag 28 flankierenden Vorsprung oder Fänger 36 der den Sicherungsring 12 in der Nähe der Lücke 14 wenigstens teilweise überdeckt, d. h. radial außerhalb des Sicherungsrings 12 liegt. Wie aus Fig. 1 hervorgeht, trägt die Scheibe 10 vorzugsweise zwei Fänger 36, wobei beidseits des Anschlags 28 je ein Fänger 36 angeordnet ist, so daß jedes der beiden beidseits des Anschlages 28 liegende Ende des Sicherungsrings 12 durch einen Fänger 36 überdeckt ist. Jeder Fänger 36 ist als gebogener Vorsprung 38 ausgebildet, der einen sich im wesentlichen radial nach innen erstreckenden Arm 40 aufweist, an dessen inneren Ende sich ein Finger 42 anschließt. Der Finger 42 ist in eine im wesentlichen parallel zur Wellenachse 18 verlaufende Richtung abgebogen und ragt über eine Seitenfläche der Scheibe 10 hervor. Der Finger 42 jedes Fängers 36 liegt wenigstens teilweise radial außerhalb der nach außen weisenden Fläche 13 des Sicherungsrings 12, um zu verhindern, daß die Enden des Sicherungsrings 12 radial aus der Nut 16 der Welle 18 austreten. Vorzugsweise sind die Fänger 36 so ausgebildet, daß der Abstand zwischen dem jeweiligen Finger 42 und der nach außen weisenden Fläche 13 des Sicherungsrings 12 einige wenige Millimeter beträgt.

Bei der Montage wird folgendermaßen vorgegangen:

Der Sicherungsring 12 wird in die Nut 16 der Welle 18 eingesetzt und derart ausgerichtet, daß seine Lücke 14 den Anschlag 28 der Scheibe 10 bei dessen Einbau aufnehmen kann. Dann wird die Scheibe 10 so auf die Welle 18 aufgeschoben, daß sie an den Sicherungsring 12 angrenzt. Die Zähne 24 der Scheibe 10 und die Keilzähne 26 der Welle 18 greifen dabei ineinander. Ferner greift der Anschlag 28 der Scheibe 10 in die Lücke 14 des Sicherungsrings 12 ein. Außerdem ragen die Fänger 36 der Scheibe 10 im Bereich der Enden 15 des Sicherungsrings 12 über dessen radial äußere Flächen 13. Als nächstes wird das Kegelrollenlager 20 auf der Welle 18 angrenzend zur Scheibe 10 installiert. Dabei wird vorzugsweise zunächst dessen kegelförmiger innerer Laufring 50 mit den Kegelrollen 52 auf die Welle 18 geschoben und an die Scheibe 10 angelegt. Der Außenring 54 des Kegelrollenlagers 20 ist in einem nicht dargestellten Getriebegehäuse vormontiert. Die Welle 18, die den Sicherungsring 12, die Scheibe 10 und den inneren Laufring 50 mit den Kegelrollen 52 des Kegelrollenlagers 20 trägt, wird nun in das Getriebegehäuse derart montiert, daß der innere Laufring 50 mit den Kegelrollen 52 in den Außenring 54 des Kegelrollenlagers 20 eingeführt wird.

In der dargestellten, bevorzugten Ausbildung der Erfindung wird ein Verdrehen der Scheibe 10 relativ zur Welle 18 durch das Ineinandergreifen der Zähne 24 der Scheibe 10 und der Keilzähne 26 der Welle 18 verhindert. Ein Verdrehen der Scheibe 10 kann auch auf verschiedene andere bekannte Weisen verhindert werden. Beispielsweise kann ein Zahn radial nach außen von der Welle 18 abstehen und in eine in die Scheibe 10 eingelassene Aussparung eingreifen. Alternativ können die Welle 18 und die Scheibe 10 mit zueinander passenden Abflachungen versehen sein. Die Welle 18 und die Scheibe 10 können auch zusammenpassende Keilnuten enthalten, in die ein Keil eingesetzt wird.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Scheibe (10) zum Sichern eines in der umlaufenden Nut (16) einer Welle (18) angeordneten Sicherungsrings (12), bestehend aus einem im wesentlichen flachen, ringförmigen Grundkörper, dadurch gekennzeichnet, daß der Grundkörper wenigstens eine nach innengerichteten radiale Verzahnung (24) trägt, die dem Eingriff in eine entsprechende Verzahnung (26) der Welle (18) und der Drehsicherung der Scheibe (10) auf der Welle (18) dient, und daß von dem Grundkörper ein Anschlag (28) absteht, der dem Eingriff in eine Lücke (14) zwischen zwei Enden (15) des Sicherungsrings (12) dient, um diesen gegen eine Verdrehung relativ zur Welle (18) zu sichern.

2. Scheibe nach Anspruch 1, dadurch gekennzeichnet, daß der Anschlag (28) einen abgebogenen, radial nach innen gerichteten Vorsprung (30) enthält.

3. Scheibe nach Anspruch 1 oder 2, dadurch gekennzeichnet, daß der Anschlag (28) einen sich im wesentlichen radial erstreckenden Schenkel (32) und einen Fuß (34) aufweist, wobei der Fuß (34) im wesentlichen senkrecht von dem Schenkel (32) absteht.

4. Scheibe nach einem der Ansprüche 1 bis 3, dadurch gekennzeichnet, daß wenigstens ein Fänger (36) von dem Grundkörper seitlich absteht, der im montierten Zustand der Scheibe (10) den Sicherungsring (12) wenigstens teilweise radial übergreift, um diesen in der Nut (16) der Welle (18) zurückzuhalten.

5. Scheibe nach Anspruch 4, dadurch gekennzeichnet, daß der Fänger (36) einen gebogenen, radial nach innen gerichteten Vorsprung (38) enthält.

6. Scheibe nach Anspruch 4 oder 5, dadurch gekennzeichnet, daß der Fänger (36) einen sich im wesentlichen radial erstrekkenden Arm (40) und einen Finger (42) aufweist, welcher im wesentlichen senkrecht von dem Arm (40) absteht.

7. Scheibe nach einem der Ansprüche 1 bis 6, dadurch gekennzeichnet, daß die Scheibe (10) wenigstens einen Fänger (36) aufweist, der sich im montierten Zustand der Scheibe (10) über eine radial nach außen weisende Fläche (13) des Sicherungsrings (12) erstreckt, um diesen in der Nut (16) der Welle (18) zurückzuhalten.

8. Anordnung eines Sicherungsrings (12) und einer Scheibe (10) auf einer Welle (18), bei der die Welle (18) eine umlaufende Nut (16) und wenigstens einen sich axial erstreckenden Keilzahn (26) aufweist und der Sicherungsring (12) in der Nut (16) angeordnet ist und in Umfangsrichtung zwei gegenüberliegende Enden (15) aufweist, zwischen denen eine Lücke (14) ausgebildet ist, dadurch gekennzeichnet, daß die Scheibe (10) nach einem der Ansprüche 1 bis 7 ausgebildet ist.

9. Anordnung nach Anspruch 8, dadurch gekennzeichnet, daß die Welle (18) mehrere sich axial erstreckende Keilzähne (26) und der Grundkörper der Scheibe (10) mehrere im wesentlichen radial nach innen ausgerichtete Zähne (24) enthält, die mit den Keilzähnen (26) der Welle (18) in Eingriff treten.

10. Anordnung nach Anspruch 8 oder 9, dadurch gekennzeichnet, daß die Scheibe (10) zwei Fänger (36) aufweist, die beidseits der Lücke (14) angeordnet sind, wobei jeder Fänger (36) einen sich im wesentlichen radial ausgerichteten Arm (40) und einen Finger (42) aufweist, welcher im wesentlichen senkrecht von dem Arm (40) absteht.

## Claims

1. A washer (10) for securing a retention ring (12) disposed in the encircling groove (16) of a shaft (18), consisting of a substantially flat, annular base body, characterized in that the base body carries at least one inwardly directed radial tooth (24), which serves to engage with a corresponding tooth (26) of the shaft (18) and to secure the washer (10) against rotation on the shaft (18), and in that a stop (28) projects from the base body and serves to engage in a gap (14) between two ends (15) of the retention ring (12), in order to secure this against rotation relative to the shaft (18).

2. A washer according to claim 1, characterized in that the stop (28) comprises a bent over, radially inwardly directed projection (30).

3. A washer according to claim 1 or 2, characterized in that the stop (28) comprises a limb (32) extending substantially radially and a foot (34), wherein the foot (34) projects substantially perpendicularly from the limb (32).

4. A washer according to any of claims 1 to 3, characterized in that at least one catch (36) projects to the side from the base body and engages at least partially radially over the retaining ring (12) in the assembled state of the washer (10), in order to retain this ring in the groove (16) of the shaft (18).

5. A washer according to claim 4, characterized in that the catch (36) comprises a bent, radially inwardly directed projection (38).

6. A washer according to claim 4 or 5, charactenzed in that the catch (36) comprises a substantially radially extending arm (40) and a finger (42), which projects substantially perpendicularly from the aim (40).

7. A washer according to any of claims 1 to 6, characterized in that the washer (10) comprises at least one catch (36) which extends in the assembled state of the washer (10) over a radially outwardly facing surface (13) of the retaining ring (12), in order to retain this in the groove (16) of the shaft (18).

8. An assembly of a retaining ring (12) and a washer (10) on a shaft (18), in which the shaft (18) comprises an encircling groove (16) and at least on axially extending spline (26) and the retaining ring (12) is disposed in the groove (16) and has in the circumferential direction two opposed ends (15), between which a gap (14) is formed, characterized in that the washer (10) is formed according to any of claims 1 to 7.

9. An assembly according to claim 8, characterized in that the shaft (18) has a plurality of axially extending splines (26) and the base body of the washer (10) has a plurality of teeth (24) directed substantially radially inwardly and which come into engagement with the splines (26) of the shaft (18).

10. An assembly according to claim 8 or 9, characterized in that the washer (10) has two catches (36) which are arranged on the two sides of the gap (14), wherein each catch (36) comprises a substantially radially directed arm (40) and a finger (42) which projects substantially perpendicularly from the arm (40).

## Revendications

1. Rondelle (10) servant à bloquer une bague de sécurité (12) disposée dans la gorge circonférentielle (16) d'un arbre (18), constituée par un corps de base annulaire essentiellement plat, caractérisée en ce que le corps de base porte au moins une denture radiale (24) dirigée vers l'intérieur, qui est destinée à s'engager dans une denture correspondante (26) de l'arbre (18) et à bloquer en rotation la rondelle (10) sur l'arbre (18), et que sur le corps de base fait saillie une butée (28), qui est destinée à s'engager dans un espace vide (14) présent entre deux extrémités (15) de la bague de sécurité (12), pour bloquer cette dernière contre une rotation par rapport à l'arbre (18).

2. Rondelle selon la revendication 1, caractérisée en ce que la butée (28) possède un appendice saillant coudé (30), qui fait saillie radialement vers l'intérieur.

3. Rondelle selon la revendication 1 ou 2, caractérisée en ce que la butée (28) possède une branche (32) qui s'étend essentiellement radialement, et un pied (34), le pied (34) faisant saillie essentiellement perpendiculairement à partir de la branche (32).

4. Rondelle selon l'une des revendications 1 à 3, caractérisée à ce qu'à partir du corps de base fait saillie latéralement au moins un élément de retenue (36), qui, lorsque la rondelle (10) est à l'état monté, s'engage au moins en partie radialement au-dessus de la bague de sécurité (12), pour retenir cette bague dans la gorge (16) de l'arbre (18).

5. Rondelle selon la revendication 4, caractérisée en ce que l'élément de retenue (36) contient un appendice saillant coudé (38), qui est dirigé radialement vers l'intérieur.

6. Rondelle selon la revendication 4 ou 5, caractérisée en ce que l'élément de retenue (36) possède un bras (40) qui s'étend essentiellement radialement et un doigt (42), qui fait saillie essentiellement perpendiculairement à partir du bras (40).

7. Rondelle selon l'une des revendications 1 à 6, caractérisée en ce que la rondelle (10) comporte au moins un élément de retenue (36) qui, lorsque la rondelle (10) est à l'état monté, s'étend au-dessus d'une surface (13), dirigée radialement vers l'extérieur, de la bague de sécurité (12) de manière à retenir cette dernière dans la gorge (16) de l'arbre (18).

8. Dispositif formé d'une bague de sécurité (12) et d'une rondelle (10) installées sur un arbre (18), dans lequel l'arbre (18) comporte une gorge circonférentielle (16) et au moins une dent de clavetage (26) qui s'étend axialement, et la bague de sécurité (12) est disposée dans la gorge (16) et comporte, dans la direction circonférentielle, deux extrémités opposées (15), entre lesquelles est formé un espace vide (14), caractérisé en ce que la rondelle (10) est agencée conformément à l'une des revendications 1 à 7.

9. Dispositif selon la revendication 8, caractérisé en ce que l'arbre (18) contient plusieurs dents de clavetage (26) qui s'étendent axialement et que le corps de base de la rondelle (10) contient plusieurs dents (24) qui sont dirigées essentiellement radialement vers l'intérieur et engrènent avec les dents de clavetage (26) de l'arbre (18).

10. Dispositif selon la revendication 8 ou 9, caractérisé en ce que la rondelle (10) comporte deux éléments de retenue (36), qui sont disposés des deux côtés de l'intervalle vide (14), chaque élément de retenue (36) possédant un bras (40) dirigé essentiellement radialement et un doigt (42), qui fait saillie essentiellement perpendiculairement à partir du bras (40).
